# EUROPÄISCHE PATENTSCHRIFT

(11) **EP 3 720 787 B1**
(45) Veröffentlichungstag und Bekanntmachung des Hinweises auf die Patenterteilung: **26.03.2025**
(21) Anmeldenummer: 18812154.5
(22) Anmeldetag: 03.12.2018
(51) Int. Cl.: B65G 1/137, B65G 1/04, H02M 1/36, H02M 1/40, H02M 3/335, B65G 1/08

(54) **MODULARE LAGER- UND KOMMISSIONIEREINRICHTUNG**
MODULAR STORAGE AND PICKING SYSTEM
INSTALLATION MODULAIRE DE STOCKAGE ET DE PRÉPARATION DE COMMANDE

(30) Priorität: 07.12.2017 DE 102017129120
(43) Veröffentlichungstag der Anmeldung: 14.10.2020
(73) Patentinhaber: stow Robotics GmbH, 63868 Großwallstadt (DE)
(72) Erfinder: BUCHMANN, Rainer, 63868 Grosswallstadt (DE)
(74) Vertreter: Betten & Resch
(86) Internationale Anmeldenummer: PCT/EP2018/083260
(87) Internationale Veröffentlichungsnummer: WO 2019/110461

(56) Entgegenhaltungen:
- EP-A1- 1 005 432
- DE-A1- 10 019 632
- DE-A1- 102014 104 470
- DE-A1- 102016 102 262
- US-A1- 2008 131 241
- US-A1- 2013 149 080
- US-A1- 2017 036 859

## Beschreibung

Die Erfindung betrifft eine modular aufgebaute Lager- und Kommissioniereinrichtung für in Behältern gelagerte Artikel sowie ein Verfahren zum Aufbau und zur Inbetriebnahme derselben.

### Hintergrund der Erfindung

Für den internetgestützten Versandhandel (e-Commerce) ist eine flexible, schnelle und zuverlässige Logistik unerlässlich. Dazu gehören Lager- und Kommissioniereinrichtungen, die die einzelnen Kundenbestellungen zusammenstellen, verpacken und versandfertig machen.

Der Bedarf an Lager- und Kommissionierkapazität kann sich kurzfristig ändern, z.b. wenn ein Start-Up-Unternehmen schnell "hochskaliert", ein neuer Markt erobert werden soll oder eine Nachfragespitze (etwa das Weihnachtsgeschäft) abgearbeitet werden muss. Es besteht daher der Bedarf nach Lager- und Kommissioniereinrichtungen, die schnell und flexibel in Betrieb genommen und in sehr kurzer Zeit entfernt und an einen anderen Ort verbracht werden können. Die DE 10 2016102262 offenbart eine zum Teil modulare Lager- und Kommissioniereinrichtung, aufweisend eine Lagereinheit mit einer Vielzahl von Lagerplätzen zur Aufnahme von Lagerbehältern, eine an einer der Stirnseiten der Lagereinheit angeordnete Kommissioniereinheit, und eine sich entlang der Längsachse der Lagereinheit erstreckende Fördereinheit zur Förderung von Lagerbehältern zwischen der Lagereinheit und der Kommissioniereinheit.

Die US2013/149080 offenbart eine modulare Lagereinrichtung, aufweisend eine Lagereinheit mit einer Vielzahl von quer zur Längsrichtung der Lagereinheit angeordneten Durchlaufkanälen zur Aufnahme von jeweils mehreren Lagerbehältern in einem Durchlaufkanal zur Lagerung von Artikeln, und eine sich entlang der Längsachse der Lagereinheit erstreckende Fördereinheit zur Förderung von Lagerbehältern zwischen der Lagereinheit und einer Entladestelle, wobei die Lagereinheit als eine selbsttragende Rahmenkonstruktion ausgebildet ist, an welcher die Fördereinheit mittels lösbarer und wiederverbindbarer mechanischer und elektrischer Steckverbindungen funktionell mit der Lagereinheit verbunden angebracht ist.

Aufgabe der Erfindung ist es daher, eine Lager- und Kommissioniereinrichtung für in Behältern gelagerte Artikel vorzuschlagen, die schnell und mit geringem Aufwand installiert, in Betrieb genommen und wieder deinstalliert werden kann und die außerdem leicht an wechselnden Warendurchsatz anpassbar (skalierbar) ist.

### Zusammenfassung der Erfindung

Erfindungsgemäß wird diese Aufgabe gelöst durch eine modulare Lager- und Kommissioniereinrichtung gemäß Anspruch 1.

Die erfindungsgemäße modulare Lager- und Kommissioniereinrichtung wird vorzugsweise an einem Installationsort aufgebaut, in Betrieb genommen und getestet, dann in transportfähige Module zerlegt und an einen Einsatzort gebracht und dort ohne weitere Inbetriebnahmetätigkeiten einsatzfähig errichtet. Eine längere Testphase kann aufgrund der Testphase am Installationsort entfallen, so dass die Anlage innerhalb weniger Stunden funktions- und arbeitsfähig ist. Der modulare Aufbau der erfindungsgemäßen Lager- und Kommissioniereinrichtung ermöglicht dabei, dass die Einheiten Lagereinheit, Kommissioniereinheit und Fördereinheit separat transportiert und dann am Einsatzort zusammengefügt werden können.

Vorzugsweise ist die Lager- und Kommissioniereinrichtung nicht am Boden oder mit einem Gebäude fest verbunden, wobei die selbsttragende Rahmenkonstruktion auf dem Boden steht und die Durchlaufkanäle, die Kommissioniereinheit und die Fördereinheit damit verbunden werden.

Erfindungsgemäß sind die Lagereinheit, die Kommissioniereinheit und die Fördereinheit mittels lösbarer mechanischer und elektrischer Steckverbindungen funktionell miteinander verbunden. Dadurch wird eine schnelle und sichere Montage und Demontage der Anlage ermöglicht.

Die Rahmenkonstruktion kann dabei Abmessungen entsprechend den Innenmaßen eines Standardcontainers oder den Maximalmaßen eines Sattelaufliegers ausgebildet sein, wodurch der Transport der Anlage erleichtert wird. Die Lagereinheit kann vorzugsweise quaderförmig mit außenliegender selbsttragender Rahmenkonstruktion ausgebildet sein, welche durch abgehängte Flacheisen gebildet ist.

Erfindungsgemäß sind die Durchlaufkanäle übereinander quer zur Längsrichtung der Lagereinheit mit einer Neigung gegenüber der Horizontalen angeordnet, wodurch die sich in den Lagerkanälen befindlichen Behälter leicht entnommen werden können. Dabei können die Durchlaufkanäle gruppenweise oder stapelweise in entgegengesetzte Richtung geneigt angeordnet sein.

Erfindungsgemäß weist die Fördereinheit beidseitig sich entlang der Längsachse der Lagereinheit erstreckende Fördereinrichtungen auf. Dadurch wird eine schnelle und effiziente Ein- und Auslagerung der Behälter in die Durchlaufkanäle der Lagereinheit ermöglicht. Die Fördereinrichtungen können dabei mittels mit der Rahmenkonstruktion lösbar verbindbaren Anbaurahmen gehalten sein.

Vorzugsweise ist die Kommissioniereinheit an einer der oder beiden Stirnseiten der Lagereinheit angeordnet und kann als manuelle, teil- oder vollautomatisierte Kommissioniereinheit ausgebildet sein.

Die Kommissioniereinheit kann dabei oberhalb oder unterhalb der Zielplätze Pufferplätze aufweisen, welche von den Fördereinrichtungen bedient werden.

Vorzugsweise weist die Kommissioniereinheit einen Lagerverwaltungsrechner auf, der die Position der Lagerbehälter in der Lagereinheit erfasst und einen Direktzugriff auf einzelne Lagerbehälter ermöglicht. Weiterhin können für den Kommissionierer optische Anzeigemittel zur Anzeige von Menge und Zielbehälter des/der zu kommissionierenden Artikel vorgesehen sein.

Die Fördereinrichtungen können als schienengeführte Fördervorrichtungen zur rechnergesteuerten, automatisierten Ein- und Auslagerung der Lagerbehälter in die und aus den Durchlaufkanälen der Lagereinheit ausgebildet sein.

### Figurenbeschreibung

Die Erfindung wird nachstehend anhand von Ausführungsbeispielen unter Bezugnahme auf die Zeichnungen im Einzelnen beschrieben. Dabei zeigt:
- Fig. 1: eine schematische Perspektivdarstellung der Lagereinheit und der Rahmenkonstruktion eines Ausführungsbeispiels der erfindungsgemäßen modularen Lager- und Kommissioniereinrichtung;
- Fig. 2: eine schematische Horizontalschnittdarstellung eines Ausführungsbeispiels der erfindungsgemäßen modularen Lager- und Kommissioniereinrichtung;

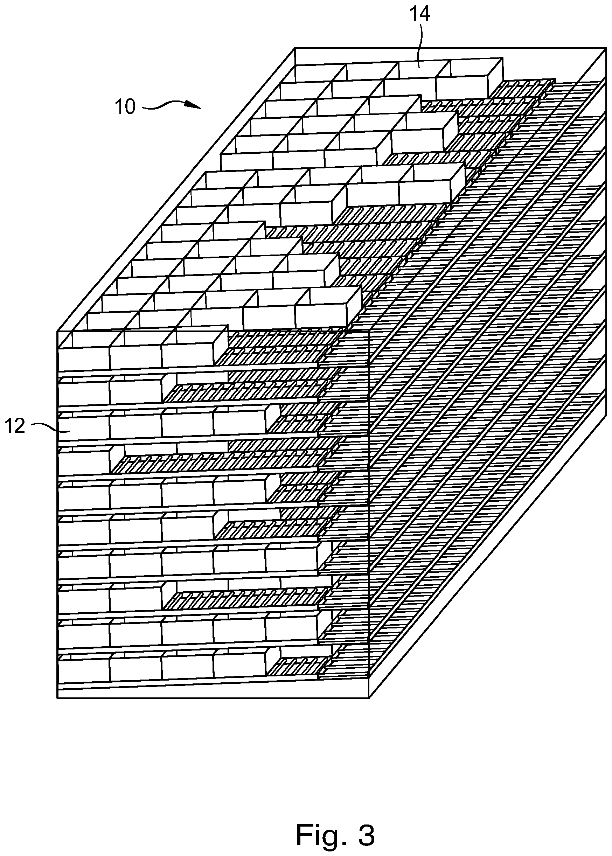

- Fig. 3: eine schematische Perspektivdarstellung der Lagereinheit eines Ausführungsbeispiels der erfindungsgemäßen modularen Lager- und Kommissioniereinrichtung;
- Fig. 4: eine schematische Querschnittdarstellung eines Ausführungsbeispiels der erfindungsgemäßen modularen Lager- und Kommissioniereinrichtung; und
- Fig. 5: eine schematische Horizontalschnittdarstellung der Kommissioniereinheit eines Ausführungsbeispiels der erfindungsgemäßen modularen Lager- und Kommissioniereinrichtung.

### Detaillierte Beschreibung der Erfindung

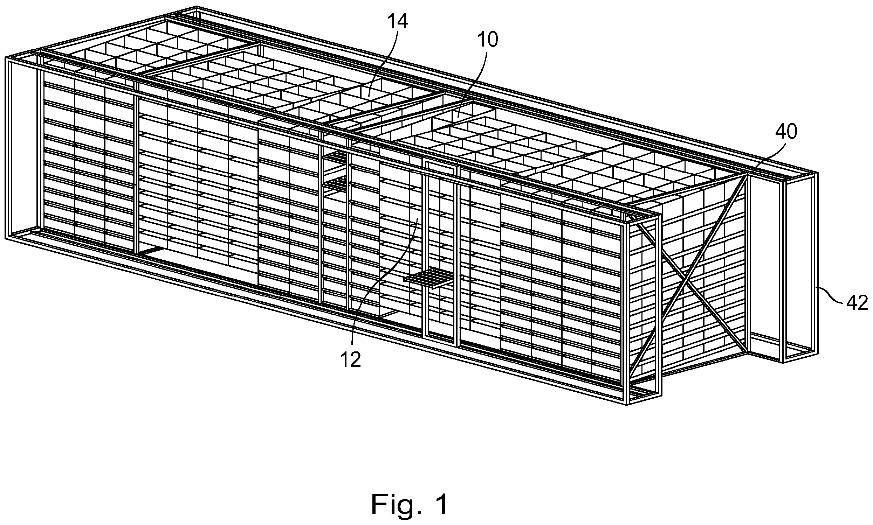

Figur 1 zeigt eine schematische Perspektivdarstellung der Lagereinheit 10 und der Rahmenkonstruktion 40 eines Ausführungsbeispiels der erfindungsgemäßen modularen Lager- und Kommissioniereinrichtung 100. An beiden Längsseiten sind Fördereinrichtungen zu sehen. Die Kommissioniereinheit ist bei dieser Darstellung aus Gründen der besseren Darstellbarkeit weggelassen. Die Rahmenkonstruktion 40 besteht aus einem selbsttragenden Rahmen aus Stahlrohr, Flachmetall oder Aluminium oder einem anderen geeigneten Material und weist dabei die Innenmaße eines 40-Fuss Containers auf oder besitzt Abmessungen, derart, dass er auf einen üblichen Lkw-Sattelauflieger passt. Damit wird eine zeitsparende Be- und Entladung von sowohl 40-Fuss Containern wie auch von Sattelaufliegern ermöglicht.

In die Rahmenkonstruktion 40 ist die langgestreckte Lagereinheit 10 integriert, in der Durchlaufkanäle 12 für handelsübliche Behälter 14 oder Tablare integriert sind, welche gruppenweise oder spaltenweise in entgegengesetzter Neigungsrichtung angeordnet sein können. Die Behälter 14 können bedarfsorientiert individuell unterteilt sein, beispielsweise in Form von Einsätzen. Auch ist es möglich, die Module für verschiedene Behälterhöhen zu gestalten.

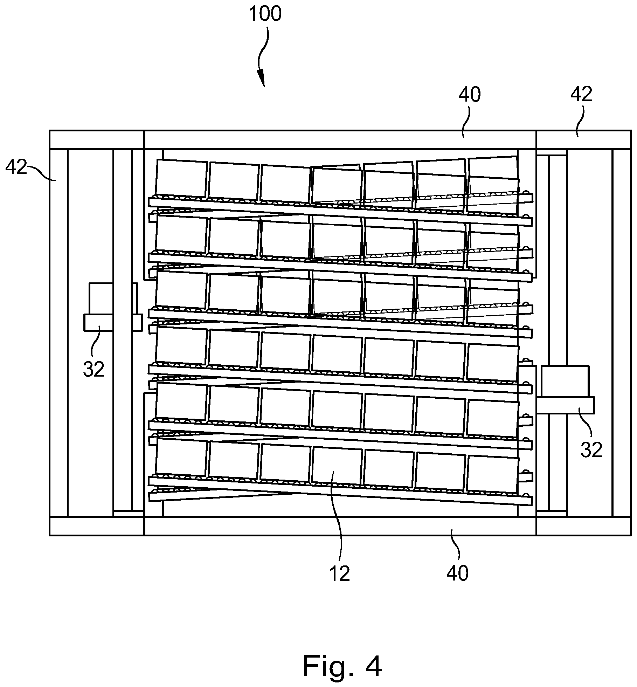

Auf den Längsseiten der Lagereinheit 10 und des Grundrahmens befinden sich schienengeführte, vollautomatische Entnahmegeräte 32, welche Behälter 14 aus den Durchlaufkanälen 12 entnehmen und wieder einlagern (siehe auch Fig. 4). Die Entnahmegeräte 32 befinden sich bereits in Betrieb genommen und getestet in einem zweiten, ggf unterteilten Rahmen 42, welcher über konische Führungselemente und elektrische Steckverbindungen mit dem Grundrahmen 40 verbunden wird.

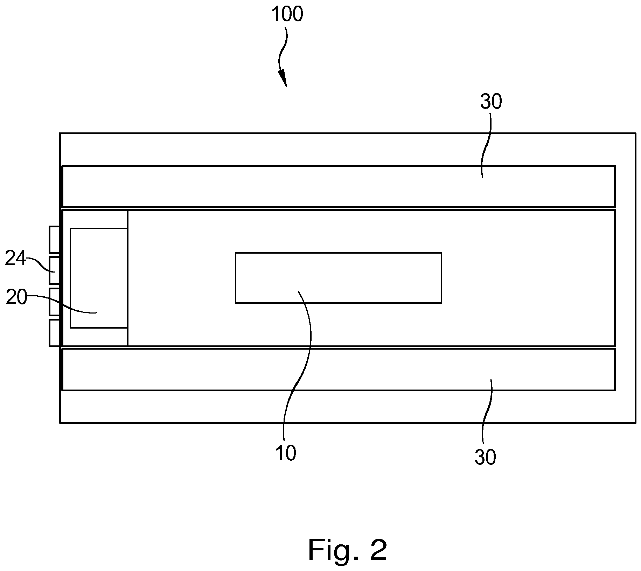

Fig. 2 zeigt eine schematische Horizontalschnittdarstellung eines Ausführungsbeispiels der erfindungsgemäßen modularen Lager- und Kommissioniereinrichtung 100. Die Fördereinheit 30 wird durch beidseitig sich entlang der Längsachse der Lagereinheit 10 erstreckende Fördereinrichtungen 32 (Fig. 4) gebildet. An der Stirnseite der Lagereinheit 10 ist die Kommissioniereinheit 20 angeordnet, die an der kurzen Seite des Grundrahmens 40 angefügt wird. Lagereinheit 10, Kommissioniereinheit 20, und Fördereinheit 30 bilden die Module der erfindungsgemäßen modularen Lager- und Kommissioniereinrichtung.

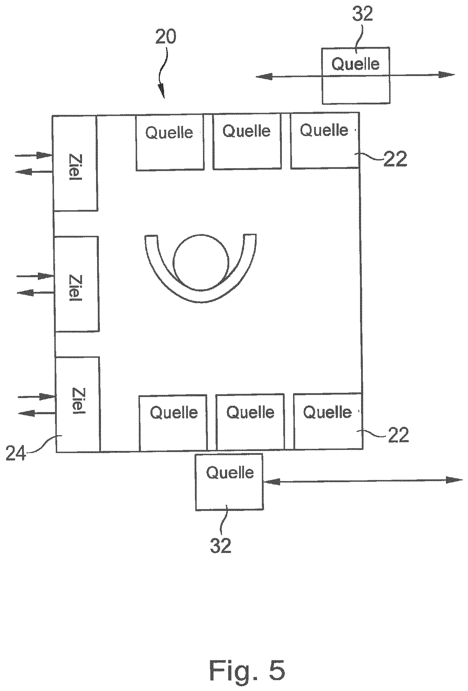

Die in Fig. 5 schematisch dargestellte Kommissioniereinheit 20 ist über die Entnahmegeräte bzw. Fördereinrichtungen 32 der Fördereinheit 30 funktional mit der Lagereinheit verbunden, wobei die Fördereinrichtungen 32 sowohl die Einlagerungen als auch die Auslagerungen der Behälter in die/aus den Durchlaufkanäle/n 12 der Lagereinheit 10 erledigen. Die Kommissioniereinheit 20 beinhaltet vorzugsweise außerdem einen Schaltschrank, die gesamte Steuerung und den Lagerverwaltungsrechner, sowie auf einer Plattform den Kommissionier- bzw. Packplatz.

Die Funktionsweise der erfindungsgemäßen modularen Lager- und Kommissioniereinrichtung wird im Folgenden erläutert.

Ein für einen Kommissioniervorgang erforderlicher Quellbehälter 14 wird nach dem Ware-zur-Person Prinzip aus der Lagereinheit 10 ausgelagert und auf einem der Andienplätze 22 der Kommissioniereinheit 20 dem Kommissionierer zur Verfügung gestellt. Via an sich bekannten Lichtanzeigen oder Bildschirmdarstellung (nicht dargestellt) wird der Kommissionierer zur Entnahme der erforderlichen Anzahl sowie des richtigen Entnahmeortes (bei unterteilten Behältern) geleitet und legt den/die entnommenen Artikel in einen Behälter an dem angegebenen Auslagerplatz 24. Nach Quittierung wird der Behälter 14 vollautomatisch von der Fördereinrichtung 32 in die Lagereinheit 10 zurückgeführt, jedoch nicht an einen festen Stellplatz, sondern in einen frei oder Algorithmen folgend gewählten Durchlaufkanal 12. Sollte sich der angeforderte Quellbehälter 14 nicht an vorderster Position des Durchlaufkanals 12 befinden, so entnimmt das Entnahmegerät 32 vollautomatisch alle vor ihm stehenden Behälter 14 nacheinander und setzt sie auf einem der in der Mitte der Lagereinheit 10 befindlichen optionalen Rücklagerförderer ab, bzw. lagert diesen Behälter in einen entgegengesetzt verlaufenden Kanal mit freien Plätzen unmittelbar wieder ein. Im Fall der Nutzung des Rücklageförderers führt das gegenüberliegende Entnahmegerät 32 diese nicht benötigten Behälter 14 demselben oder einem anderen freien Kanal wieder zu.

Ebenso ist es möglich, Behälter, welche im Auftragspool erkennbar in naher Zukunft wieder benötigt werden, auf Pufferplätzen (nicht dargestellt) ober- oder unterhalb der Zielplätze 24 des Komissioniermoduls 20 zwischen zu speichern.

Das integrierte Lagerverwaltungssystem (nicht dargestellt) steuert und verfolgt alle Bewegungen innerhalb der Anlage und steuert den Kommissionierer. Es weiß somit zu jedem Zeitpunkt wo sich welcher Behälter befindet und wieviel Bestand er enthält. Die Anbindung an den kundenseitigen Host kann on- oder offline erfolgen. Mittels spezieller Algorithmen im Lagerverwaltungssystem können gezielt freie Durchlaufkanäle geschaffen werden, in welche bei Umlagerungen gezielt in naher Zukunft benötigte Behälter reihenfolgenoptimiert eingelagert werden können, um die Zugriffszeiten zum Bedarfszeitpunkt zu verkürzen.

Die erfindungsgemäße modulare Lager- und Kommissioniereinrichtung 100 kann weitere Bestandteile enthalten, wie bspw. einen separaten Packtisch, Regale für Packmaterial, Drucker, Bildschirme, etc.

Die erfindungsgemäße modulare Lager- und Kommissioniereinrichtung 100 kann in sehr kurzer Zeit, üblicherweise innerhalb weniger Stunden nach Anlieferung aufgestellt, in Betrieb genommen und produktiv verwendet werden. Anders als bei herkömmlichen Kommissionieranlagen ist keine feste Verankerung in einem Gebäude erforderlich. Die erfindungsgemäße Lager- und Kommissioniereinrichtung 100 besteht aus einem selbsttragenden Rahmen 40 und den Anbaumodulen, welche nach Anlieferung lediglich vorzugsweise durch Steckverbindungen miteinander verbunden werden.

Unmittelbar nach Aufstellung der Lager- und Kommissioniereinrichtung 100 kann mit dem Einlagern von Ware begonnen werden. Dies erfolgt durch Auslagern von Leerbehältern, der computergesteuerten Befüllung mit Ware und dem anschließenden automatischen Rücklagern. Sobald ausreichend Ware vorhanden ist (die Anlage muss dazu nicht vollständig befüllt sein) kann mit dem Kommissionierbetrieb begonnen werden. Auch zu jedem späteren Zeitpunkt lassen sich Kommissionierbetrieb und Nachfüllbetrieb zeitgleich bedarfsorientiert mischen.

Die erfindungsgemäße modulare Lager- und Kommissioniereinrichtung 100 kann jederzeit und aufwandsarm in die Einzelmodule zerlegt werden und an einem anderen Ort binnen weniger Stunden wieder zusammengesetzt werden. Die Ware kann dabei in der Lagereinheit 10 verbleiben, wodurch die Wiederaufnahme des produktiven Betriebs am neuen Aufstellungsort unmittelbar beginnen kann.

Aufgrund des modularen Charakters können weitere Anlagen ohne physische Verbindung hinzugestellt und prozesstechnisch verknüpft werden. Dies kann einerseits dazu dienen, um Leistungs- oder Kapazitätssteigerungen zu bedienen, aber auch um temporäre Spitzen abzufedern. Nachdem der Spitzenbedarf vorüber ist, können Module betriebsunterbrechungsfrei wieder entfernt werden. Ebenso ist ein Abbau und Verbringung an einen anderen Aufstellungsort in ähnlich kurzer Zeit möglich.

## Patentansprüche

1. Modulare Lager- und Kommissioniereinrichtung (100), aufweisend:
- eine Lagereinheit (10) mit einer Vielzahl von Durchlaufkanälen (12) zur Aufnahme von jeweils mehreren Lagerbehältern in einem Durchlaufkanal (14) zur Lagerung von Artikeln, wobei die Durchlaufkanäle (12) übereinander quer zur Längsrichtung der Lagereinheit (10) mit einer Neigung gegenüber der Horizontalen angeordnet sind,
- eine an einer der Stirnseiten der Lagereinheit (10) angeordnete Kommissioniereinheit (20) mit einem oder mehreren Andienplätzen (22) zur Artikelentnahme und einem oder mehreren Zielplätzen (24) zur auftrags- oder teilauftragsbezogenen Zusammenstellung von Artikeln,
- eine Fördereinheit (30) zur Förderung von Lagerbehältern zwischen der Lagereinheit (10) und der Kommissioniereinheit (20), wobei die Fördereinheit (30) beidseitig sich entlang der Längsachse der Lagereinheit (10) erstreckende Fördereinrichtungen (32) aufweist;
- wobei die Lagereinheit (10) als eine selbsttragende Rahmenkonstruktion (40) ausgebildet ist, an welcher die Kommissioniereinheit (20) und die Fördereinheit (30) mittels lösbarer und wiederverbindbarer mechanischer und elektrischer Steckverbindungen funktionell miteinander verbunden angebracht sind.

2. Modulare Lager- und Kommissioniereinrichtung nach Anspruch 1, welche nicht am Boden oder mit einem Gebäude fest verbunden ist und wobei die selbsttragende Rahmenkonstruktion (40) auf dem Boden steht und die Durchlaufkanäle (12), die Kommissioniereinheit (20) und die Fördereinheit (30) damit verbunden sind.

3. Modulare Lager- und Kommissioniereinrichtung nach Anspruch 1 oder 2, wobei die selbsttragende Rahmenkonstruktion (40) durch mit Abmessungen entsprechend den Innenmaßen eines Standardcontainers oder den Maximalmaßen eines Sattelaufliegers ausgebildet ist.

4. Modulare Lager- und Kommissioniereinrichtung nach Anspruch 3, wobei die Lagereinheit (10) quaderförmig ausgebildet ist und die außenliegende selbsttragende Rahmenkonstruktion (40) durch abgehängte Flacheisen gebildet ist.

5. Modulare Lager- und Kommissioniereinrichtung nach Anspruch 4, wobei die Durchlaufkanäle (12) gruppenweise oder stapelweise in entgegengesetzte Richtung geneigt angeordnet sind.

6. Modulare Lager- und Kommissioniereinrichtung nach Anspruch 5, wobei die Fördereinrichtungen (32) mittels mit der Rahmenkonstruktion (40) lösbar verbindbaren Anbaurahmen (42) gehalten sind.

7. Modulare Lager- und Kommissioniereinrichtung nach einem der Ansprüche 5-6, wobei die Kommissioniereinheit (2) Pufferplätze oberhalb oder unterhalb der Zielplätze (24) aufweist, welche von den Fördereinrichtungen (32) bedient werden.

8. Modulare Lager- und Kommissioniereinrichtung nach einem der Ansprüche 1-7, wobei die Kommissioniereinheit (20) einen Lagerverwaltungsrechner aufweist, der die Position der Lagerbehälter (14) in der Lagereinheit (10) erfasst und einen Direktzugriff auf einzelne Lagerbehälter (12) ermöglicht.

9. Modulare Lager- und Kommissioniereinrichtung nach Anspruch 8, wobei die Kommissioniereinheit (20) optische Anzeigemittel zur Anzeige von Menge und Zielbehälter des/der zu kommissionierenden Artikel aufweist.

10. Modulare Lager- und Kommissioniereinrichtung nach Anspruch 8 oder 9, wobei die Fördereinrichtungen (32) als schienengeführte Fördervorrichtungen zur rechnergesteuerten, automatisierten Ein- und Auslagerung der Lagerbehälter in die und aus den Durchlaufkanälen (12) der Lagereinheit (10) ausgebildet sind.

11. Verfahren zum Aufbau und zur Inbetriebnahme einer modularen Lager- und Kommissioniereinrichtung (100) gemäß einem der Ansprüche 1-10 aufweisend die Verfahrensschritte:
- Aufbau, Inbetriebnahme und Test der Lager- und Kommissioniereinrichtung (100) an einem Installationsort,
- Modulares Zerlegen der Lager- und Kommissioniereinrichtung (100) und Transport derselben zu einem Einsatzort, und
- Zusammensetzen der Module der Lager- und Kommissioniereinrichtung (100) am Einsatzort.

12. Verfahren nach Anspruch 11, wobei Lagereinheit (10), Kommissioniereinheit (20) und Fördereinheit (30) separat transportiert und dann am Einsatzort zusammengefügt werden.

13. Verfahren nach Anspruch 11 oder 12, wobei die Lager- und Kommissioniereinrichtung (100) von einem ersten Einsatzort zu einem oder mehreren weiteren Einsatzorten transportiert und für den Transport modular demontiert wird.

## Claims

1. A modular storage and order picking device (100), comprising:
- a storage unit (10) having a plurality of through-flow channels (12) for receiving a plurality of storage containers in each through-flow channel (12) for storing articles, wherein said through-flow channels (12) are arranged one above the other transversely to the longitudinal direction of said storage unit (10) and in a manner inclined relative to the horizontal,
- an order picking unit (20) arranged on one or both end faces of said storage unit (10) and having one or more dispensing spaces (22) for removing articles and one or more target spaces (24) for collating articles relating to an order or partial order,
- a conveyor unit (30) for conveying storage containers between said storage unit (10) and said order picking unit (20), wherein said conveyor unit (30) has conveyor means (32) extending on both sides along the longitudinal axis of the storage unit (10);
- wherein said storage unit (10) is formed as a self-supporting frame structure (40), on which said order picking unit (20) and said conveyor unit (30) are mounted so as to be functionally connected to one another by means of mechanical and electrical plug-in connections that can be disconnected and reconnected.

2. The modular storage and order picking device according to claim 1, which is not permanently connected to the floor or to a building, and wherein said self-supporting frame structure (40) stands on the floor and wherein said through-flow channels (12), said order picking unit (20) and said conveyor unit (30) are connected thereto.

3. The modular storage and order picking device according to claim 1 or 2, wherein said self-supporting frame structure (40) is configured with dimensions corresponding to the internal dimensions of a standard container or the maximum dimensions of a semi-trailer.

4. The modular storage and order picking device according to claim 3, wherein said storage unit (10) is shaped as a cuboid and wherein said self-supporting frame structure (40) arranged on the outside is formed by suspended flat bars.

5. The modular storage and order picking device according to claim 4, wherein said through-flow channels (12) are arranged in groups or stacks so as to be inclined in opposite directions.

6. The modular storage and order picking device according to claim 5, wherein said conveyor means (32) are held by add-on frames (42) which can be detachably connected to said frame structure (40).

7. The modular storage and order picking device according to one of claims 5 to 6, wherein said order picking unit (20) has buffer spaces above or below said target spaces (24), said buffer spaces being served by said conveyor means (32).

8. The modular storage and order picking device according to one of claims 1 to 7, wherein said order picking unit (20) comprises an inventory management computer which records the position of the storage containers (14) in said storage unit (10) and enables direct access to individual storage containers (12).

9. The modular storage and order picking device according to claim 8, wherein said order picking unit (20) comprises optical display means for displaying the quantity and target container of the article(s) to be picked.

10. The modular storage and order picking device according to claim 8 or 9, wherein said conveyor means (32) are configured as rail-guided conveyor devices for storing the storage containers in said through-flow channels (12) of said storage unit (10) and retrieving them therefrom in an automated and computer-controlled manner.

11. A method for constructing and commissioning a modular storage and order picking device (100) according to one of claims 1 to 10, said method comprising the steps of:
- constructing, commissioning and testing said storage and order picking device (100) at an installation site,
- breaking down said storage and order picking device (100) in a modular fashion and transporting said device to a site of use, and
- assembling the modules of the storage and order picking device (100) at a site of use.

12. The method according to claim 11, wherein said storage unit (10), said order picking device (20) and said conveyor unit (30) are transported separately and are then assembled at the site of use.

13. The method according to claim 11 or 12, wherein said storage and order picking device (100) is transported from a first site of use to one or more further sites of use and is modularly disassembled for the transport.

## Revendications

1. Installation modulaire de stockage et de préparation de commandes (100), comprenant :
- une unité de stockage (10) avec une pluralité de canaux de passage (12) pour recevoir respectivement plusieurs récipients de stockage dans un canal de passage (14) pour le stockage d'articles, les canaux de passage (12) étant agencés les uns au-dessus des autres transversalement à la direction longitudinale de l'unité de stockage (10) avec une inclinaison par rapport à l'horizontale,
- une unité (20) de préparation de commandes agencée sur l'une des faces frontales de l'unité de stockage (10), avec un ou plusieurs emplacements de service (22) pour le prélèvement d'articles et un ou plusieurs emplacements de destination (24) pour le regroupement d'articles en fonction de la commande ou de la commande partielle,
- une unité de transport (30) pour le transport de récipients de stockage entre l'unité de stockage (10) et l'unité (20) de préparation de commandes, l'unité de transport (30) présentant des dispositifs de transport (32) s'étendant des deux côtés le long de l'axe longitudinal de l'unité de stockage (10) ;
- l'unité de stockage (10) étant réalisée sous la forme d'une structure d'ossature autoportante (40), sur laquelle l'unité (20) de préparation de commandes et l'unité de transport (30) sont montées en étant reliées entre elles de manière fonctionnelle au moyen de connexions mécaniques et électriques enfichables, détachables et reconnectables.

2. Installation modulaire de stockage et de préparation de commandes selon la revendication 1, qui n'est pas fixée au sol ou à un bâtiment, et dans laquelle la structure d'ossature autoportante (40) repose sur le sol, et les canaux de passage (12), l'unité (20) de préparation de commandes et l'unité de transport (30) sont reliés à celle-ci.

3. Installation modulaire de stockage et de préparation de commandes selon la revendication 1 ou la revendication 2, dans laquelle la structure d'ossature autoportante (40) est formée selon des dimensions correspondant aux dimensions intérieures d'un conteneur standard ou aux dimensions maximales d'une semi-remorque.

4. Installation modulaire de stockage et de préparation de commandes selon la revendication 3, dans laquelle l'unité de stockage (10) est de forme parallélépipédique et la structure d'ossature autoportante extérieure (40) est formée par des fers plats suspendus.

5. Installation modulaire de stockage et de préparation de commandes selon la revendication 4, dans laquelle les canaux de passage (12) sont agencés par groupes ou par piles et inclinés dans des directions opposées.

6. Installation modulaire de stockage et de préparation de commandes selon la revendication 5, dans laquelle les dispositifs de transport (32) sont maintenus au moyen de structures rapportées (42) aptes à être reliées de manière amovible à la structure d'ossature (40).

7. Installation modulaire de stockage et de préparation de commandes selon l'une des revendications 5 à 6, dans laquelle l'unité (2) de préparation de commandes présente des emplacements tampons au-dessus ou au-dessous des emplacements de destination (24) qui sont desservis par les dispositifs de transport (32).

8. Installation modulaire de stockage et de préparation de commandes selon l'une des revendications 1 à 7, dans laquelle l'unité (20) de préparation de commandes comporte un ordinateur de gestion de stock qui détecte la position des récipients de stockage (14) dans l'unité de stockage (10) et permet un accès direct à des récipients de stockage (12) individuels.

9. Installation modulaire de stockage et de préparation de commandes selon la revendication 8, dans laquelle l'unité (20) de préparation de commandes comporte des moyens d'affichage optiques pour afficher la quantité et le conteneur de destination du ou des articles à préparer.

10. Installation modulaire de stockage et de préparation de commandes selon la revendication 8 ou la revendication 9, dans laquelle les dispositifs de transport (32) sont réalisés sous forme de dispositifs de transport guidés par des rails pour le stockage et le déstockage commandés par ordinateur et automatisés des conteneurs de stockage dans et hors des canaux de passage (12) de l'unité de stockage (10).

11. Procédé de mise en place et de mise en service d'une installation modulaire et de préparation de commandes (100) selon l'une des revendications 1 à 10, comprenant les étapes de procédé suivantes :
- montage, mise en service et test de l'installation (100) de stockage et de préparation de commandes sur un site d'installation,
- démontage de l'installation modulaire de stockage et de préparation de commandes (100) et transport de celle-ci vers un lieu d'utilisation, et
- assemblage des modules de l'installation (100) de stockage et de préparation de commandes sur le lieu d'utilisation.

12. Procédé selon la revendication 11,
dans lequel l'unité de stockage (10), l'unité (20) de préparation de commandes et l'unité de transport (30) sont transportées séparément puis assemblées sur le lieu d'utilisation.

13. Procédé selon la revendication 11 ou la revendication 12, dans laquelle l'installation (100) de stockage et de préparation de commandes est transportée d'un premier lieu d'utilisation à un ou plusieurs autres lieux d'utilisation et est démontée de manière modulaire pour le transport.
